# EUROPÄISCHE PATENTSCHRIFT

(11) **EP 2 920 477 B1**
(45) Veröffentlichungstag und Bekanntmachung des Hinweises auf die Patenterteilung: **06.02.2019**
(21) Anmeldenummer: 13792348.8
(22) Anmeldetag: 14.11.2013
(51) Int. Cl.: F16C 3/10, B23P 11/00, B23P 13/00

(54) **GEBAUTE KURBELWELLE SOWIE VERFAHREN ZUR HERSTELLUNG EINER GEBAUTEN KURBELWELLE**
MOUNTED CRANKSHAFT AND METHOD FOR MANUFACTURING A MOUNTED CRANKSHAFT
VILLEBREQUIN ASSEMBLÉ ET PROCÉDÉ DE FABRICATION D'UN VILLEBREQUIN ASSEMBLÉ

(30) Priorität: 19.11.2012 DE 102012111124
(43) Veröffentlichungstag der Anmeldung: 23.09.2015
(73) Patentinhaber: ThyssenKrupp Presta TecCenter AG, 9492 Eschen (LI)
(72) Erfinder: MEIER, Alex, CH-9495 Triesen (LI)
(74) Vertreter: thyssenkrupp Intellectual Property GmbH
(86) Internationale Anmeldenummer: PCT/EP2013/073856
(87) Internationale Veröffentlichungsnummer: WO 2014/076193

(56) Entgegenhaltungen:
- DE-A1-102005 019 984
- JP-A- 2009 127 854
- JP-A- 2009 257 512
- JP-A- 2010 053 918

## Beschreibung

Die vorliegende Erfindung betrifft ein Verfahren zur Herstellung einer gebauten Kurbelwelle für einen Verbrennungsmotor, wobei als Fügepartner Kurbelwangen mit Aufnahmeöffnungen und Kurbelzapfen mit endseitigen Befestigungsabschnitten bereitgestellt werden, wobei die Aufnahmeöffnungen oder die Befestigungsabschnitte mit einer in einer Längsrichtung der Kurbelwelle verlaufenden Verzahnung versehen sind, wobei der Querschnitt der Befestigungsabschnitte durch die Verzahnung bereichsweise über den Innenquerschnitt einer zugeordneten Aufnahmeöffnung hinausgeht, so dass bei dem Verbinden der Fügepartner an den Aufnahmeöffnungen der Kurbelwangen oder den Befestigungsabschnitten der Kurbelzapfen eine Materialverdrängung und Konturumformung erfolgt und die Fügepartner so formschlüssig verbunden werden, und wobei die Befestigungsabschnitte derart in die Aufnahmeöffnung eingepresst werden, dass die Fügepartner ohne weitere Befestigungsmittel und ohne eine zusätzliche Verbindung in Längsrichtung betriebssicher in einem Kraftschluss aneinander fixiert werden.

Eine Kurbelwelle eines Verbrennungsmotors ermöglicht durch ihre gekröpfte Form mit einer exzentrischen Anordnung der Kurbelzapfen die Umwandlung einer Hubbewegung der Kolben, welche über Pleuelstangen an die Kurbelwelle angeschlossen sind, in eine Drehbewegung. Da die Kurbelwelle bei einem Verbrennungsmotor ein zentrales Element der Kraftübertragung ist, wirken sehr große Dreh- und Biegemomente sowie Kräfte, welche sich sowohl zeitlich als auch örtlich stark ändern. Die Kurbelwelle muss deshalb eine ausreichende Stabilität und Festigkeit aufweisen.

Bei den aus dem Stand der Technik bekannten Kurbelwellen hängt die Materialauswahl und das Herstellungsverfahren von der Belastung ab. Hoch belastete Kurbelwellen werden meist geschmiedet, wobei für kleinere Motoren aus Kosten- und Gewichtsgründen auch gegossene Kurbelwellen verwendet werden (Bosch, Kraftfahrtechnisches Taschenbuch, 26. Auflage, 2007, Seite 477 ff.).

Um die Kurbelwelle flexibler, einfacher und somit kostengünstiger zu gestalten, werden im Stand der Technik auch gebaute Kurbelwellen vorgeschlagen, die aus Kurbelwangen und zwischen den Kurbelwangen angeordneten Kurbelzapfen zusammengesetzt sind. Dabei ergibt sich zunächst der Vorteil, dass nicht eine gesamte zusammenhängende Kurbelwelle sondern kleinere Elemente gefertigt werden müssen, wozu entsprechend auch kleinere Schmiede- oder Gießformen eingesetzt werden können. Durch die modulare Bauweise ist des Weiteren ein flexibler Zusammenbau möglich.

Eine gebaute Kurbelwelle ist aus der DE 822 036 bekannt. Die Kurbelbolzen weisen an ihren Enden Zähne auf, welche in zugeordnete Öffnungen der Kurbelwangen eingeschlagen werden, wobei die Verzahnung sich in die zugeordnete Aufnahmeöffnung einschneidet. Durch das Einschneiden der Verzahnung wird eine formschlüssige Verbindung erreicht, wobei die Fixierung der Kurbelzapfen an den Kurbelwangen durch Schrauben erfolgt. Als Vorteil wird hervorgehoben, dass die fertige Kurbelwelle an jeder gewollten Stelle auseinandergenommen werden kann. Bei einem späteren nochmaligen Zusammensetzen ist dann darauf zu achten, dass jeder Zahn mit der von ihm vorher erzeugten Kerbe wieder zusammenfällt, um einen gleichmäßigen Lauf zu gewährleisten.

Die konstruktive Ausgestaltung ist bei der aus DE 822 036 bekannten gebauten Kurbelwelle relativ aufwendig, da innerhalb der Aufnahmeöffnungen die Verzahnung der Befestigungsabschnitte, ein daran anschließender zylinderförmiger Abschnitt der Kurbelzapfen sowie die Sicherungsschrauben mit Unterlegscheiben mit jeweils unterschiedlichen Abmessungen anzunehmen sind. Die Aufnahmeöffnungen haben zu diesem Zweck einen sich stufenförmig ändernden Querschnitt, wobei der Bereich, in dem ein Formschluss erreicht wird, relativ kurz ist. Die Anbringung der Sicherungsschrauben ist aufwendig. Die mechanische Belastbarkeit der bekannten Kurbelwelle ist begrenzt.

Aus der DE 100 38 857 A1 sowie der DE 891 641 sind gebaute Kurbelwellen für Verbrennungsmotoren bekannt, welche Aufnahmeöffnungen aufweisende Kurbelwangen und endseitige Befestigungsabschnitte aufweisende Kurbelzapfen umfassen. Eine form- und kraftschlüssige Verbindung wird dadurch erreicht, dass die Aufnahmeöffnungen sowie die Befestigungsabschnitte eine komplementäre, von einem Kreis abweichende Form aufweisen, wobei die Kurbelwangen auf die Kurbelzapfen aufgeschrumpft werden. Gemäß der DE 100 38 857 A1 ist des Weiteren vorgesehen, dass die Kurbelzapfen einen Mittelabschnitt und dazu exzentrisch angeordnete Verbindungsabschnitte aufweisen, so dass durch die Anordnung der Kurbelzapfen bei der Verbindung mit den Kurbelwangen die Hubhöhe variiert werden kann. Bei dem in beiden Druckschriften beschriebenen Aufschrumpfen ergibt sich der Nachteil, dass die Materialauswahl begrenzt ist, wobei auch das Verfahren aufwendig ist.

Aus der GB 747,742 ist eine Kurbelwelle bekannt, die aus zumindest zwei Stücken zerlegbar gefertigt ist. Durch die Zerlegbarkeit kann die Kurbelwelle leicht montiert und erneut demontiert werden. Um die beschriebene Fertigung getrennter Teile zu ermöglichen, sind Zapfen vorgesehen, die an einer zugeordneten Kurbelwange eingepresst sind oder mit der entsprechenden Kurbelwange gemeinsam gefertigt sind. Diese Zapfen greifen dann lediglich in die Öffnung einer weiteren Kurbelwange ein, so dass dort auf einfache Weise ein Trennen und Verbinden erfolgen kann. Es ergibt sich der Nachteil, dass diese lose Verbindung eine Schwachstelle darstellt. Die in der GB 747,742 beschriebene Kurbelwelle ist insbesondere für kleine Motoren von Modellen oder dergleichen vorgesehen.

Aus der DE 1 270 893 ist eine gebaute Kurbelwelle bekannt, die gemäß dem eingangs beschriebenen Verfahren gefertigt ist. Die Kurbelwangen und die Kurbelzapfen werden miteinander verpresst. Eine besonders gute, nicht lösbare Pressverbindung ergibt sich dann, wenn in Längsrichtung Nuten vorgesehen werden, welche unterschiedliche Nut-Höhen aufweisen können.

Aus der DE 40 18 542 A1 ist eine gebaute Kurbelwelle bekannt, bei der separate Kurbelwangen und Kurbelzapfen durch einen Presssitz miteinander verbunden sind. Die Erzeugung des Presssitzes ist nicht weiter beschrieben. Die Aufnahmeöffnungen der Kurbelwangen verjüngen sich zunächst und weisen danach wieder eine Aufweitung auf.

Aus der CH 567 194 A ist eine gebaute Kurbelwelle einer Kolbenbrennkraftmaschine bekannt, welche aus U-förmigen Kurbelteilen zusammengesetzt ist, die jeweils einen Kurbelzapfen mit zwei Kurbelwangen enthalten und durch Lagerteile verbunden sind, wobei die Lagerteile jeweils einen Lagerzapfen und einen Befestigungszapfen aufweisen, der mit Presssitz in einer Bohrung in der benachbarten Kurbelwangen befestigt ist. Der Befestigungszapfen des Lagerteiles ist mit seiner Achse gegenüber der Achse des Lagerzapfens derart versetzt, dass er in der ihm zugeordneten Kurbelwange innerhalb der Kurbelebene vom Kurbelzapfen weg entfernt ist.

Die DE 29 25 058 A1 beschreibt allgemein eine Verbindung zwischen zwei Metallteilen mit Hilfe eines Formschlusses durch eine Verzahnung sowie eine Materialverformung.

Die DE 559 779 A offenbart eine Schrumpfverbindung zwischen einem Bolzen und einem eine Bohrung aufweisenden Teil, wobei in eine zylindrische Sitzfläche des Bolzens Längsriefen eingearbeitet sind.

JP 2009 257512 A offenbart eine Kurbelwelle und ein Verfahren zur Herstellung einer Kurbelwelle, welche zwei Fügepartner, nämlich eine Kurbelwange mit Aufnahmeöffnungen und einen Kurbelzapfen mit einem Befestigungsabschnitt aufweist. Der Befestigungsabschnitt weist eine Verzahnung auf, wodurch der Außendurchmesser des Befestigungsabschnittes größer dimensioniert ist, als der Innendurchmesser der Aufnahmeöffnung. Bei Einbringen des Befestigungsabschnittes in die Aufnahmeöffnung schneidet sich die Verzahnung des Kurbelzapfens in das Material der Kurbelwange, um eine formschlüssige Verbindung zwischen den beiden Fugepartnern zu ermöglichen.

Vor diesem Hintergrund liegt der Erfindung die Aufgabe zugrunde, ein Verfahren zur Herstellung einer gebauten Kurbelwelle anzugeben, mit dem auf einfache Weise eine Kurbelwelle bereitgestellt werden kann, die hohen Belastungen Stand hält. Insbesondere soll die gebaute Kurbelwelle so geformt sein, dass bei ihrer Herstellung die Gefahr von Materialfehlern bzw. Materialschädigungen reduziert wird.

Ausgehend von einem Verfahren mit den eingangs beschriebenen Merkmalen wird die Aufgabe erfindungsgemäß durch die Merkmale des Anspruches 1 gelöst.

Erfindungsgemäß wird eine kraft- und formschlüssige Verbindung auf besonders einfache Weise erreicht, ohne dass dazu weitere Befestigungsmittel, ein Verschweißen oder dergleichen notwendig sind. Durch die in Längsrichtung der Kurbelwelle verlaufende Verzahnung werden Drehmomente zuverlässig übertragen. Darüber hinaus wird auch ein Kraftschluss erzeugt, der alleine ausreichend ist, die Kurbelwangen und die Kurbelzapfen betriebssicher, das heißt auch während des Betriebs der Kurbelwelle in dem Verbrennungsmotor, sicher zu halten. Durch den modularen Aufbau können die Kosten gesenkt und die Designflexibilität erhöht werden. Um beispielsweise eine unterschiedliche Hubhöhe zu erreichen, sind lediglich entsprechend angepasste Kurbelwangen auszuwählen, wobei die Kurbelzapfen unverändert bleiben können. Auch können unterschiedliche Spezifikationen durch das Bereithalten verschiedener Kurbelzapfen und Kurbelwangen erfüllt werden. Bei einer gebauten Kurbelwelle ergibt sich zusätzlich der Vorteil, dass auch die Lagerung flexibler erfolgen kann, wobei insbesondere auch geschlossene Wälz- oder Gleitlager eingesetzt werden können, die vor dem Verpressen der Fügepartner auf die Kurbelzapfen gesetzt werden.

Erfindungsgemäß ist vorgesehen, dass sich die Aufnahmeöffnungen ausgehend von einer dem zugeordneten Kurbelzapfen zugewandten Einschubseite in Richtung einer gegenüberliegenden Seite zumindest abschnittsweise mit einer Krümmung verjüngen. Zusätzlich können sich auch die Befestigungsabschnitte in Richtung ihrer freien Enden verjüngen.

Die Aufnahmeöffnungen und die Befestigungsabschnitte der Kurbelzapfen weisen zumindest abschnittsweise optional auch eine gekrümmte Form auf, um eine besonders gleichmäßige Krafteinleitung zu erreichen. Insbesondere können die Befestigungsabschnitte eine konvexe Krümmung aufweisen, während die Aufnahmeöffnungen an ihrer Innenseite komplementär gekrümmt sind. Besonders bevorzugt ist eine Ausgestaltung, bei der die Aufnahmeöffnungen und/oder die Befestigungsabschnitte in einem Längsschnitt zumindest abschnittsweise einen parabelförmigen Verlauf aufweisen. In Kombination mit der Verzahnung wird dabei erreicht, dass das Einpressen über einen längeren Bereich mit einer zunehmenden Materialumformung erfolgt, wodurch an der Stirnfläche der Verzahnung eine Belastung vermieden wird. Andererseits wird auch ein sehr plötzlicher, steiler Kraftanstieg beim Einpressen verhindert.

Durch die zumindest abschnittsweise gekrümmte, insbesondere parabelförmige Verjüngung der Aufnahmeöffnungen und optional auch der Befestigungsabschnitte wird sowohl gegenüber einer zylindrischen oder konischen Form eine erhebliche Verbesserung erreicht. Bei einer zylindrischen Form ist die Verteilung der beim Fügen auftretenden Kräfte nicht optimal. Bei einer zylindrischen Ausgestaltung wird an der Stirnseite des mit der Verzahnung versehenen, üblicherweise härteren Fügepartners eine sehr starke Belastung beobachtet. Die Materialverdrängung des weicheren Fügepartners erfolgt im Wesentlichen an der Stirnfläche der Verzahnung, wodurch die Gefahr einer Überlastung besteht. Darüber hinaus ist bei einer zylindrischen Ausgestaltung der Aufnahmeöffnungen sowie der Befestigungsabschnitte der Kraftschluss verbesserungsbedürftig.

Wenn die Aufnahmeöffnungen sowie die zugeordneten Befestigungsabschnitte eine komplementäre konische Form aufweisen, können die Befestigungsabschnitte in die zugeordneten Aufnahmeöffnungen zunächst lose eingesetzt werden, wobei dann ein Kontakt zwischen den beiden Fügepartnern gleichzeitig über einen längeren Bereich erfolgt. Ausgehend von einem solchen ersten Kontakt erfolgt dann ein Einpressen bei einem vergleichsweise kurzen Hub, so dass sehr große Kräfte auftreten können.

Damit sich die an dem einen Fügepartner ausgebildete Verzahnung in das Material des anderen Fügepartners einschneiden bzw. eingraben und das Material des anderen Fügepartners verdrängen kann, ist es zweckmäßig, wenn der mit der Verzahnung vorgesehene Fügepartner eine höhere Härte aufweist, um eine definierte Verbindung zu erhalten.

Die Materialkombination, die Geometrie der Aufnahmeöffnungen sowie der Befestigungsabschnitte der Kurbelzapfen sowie die Einpresskraft sind so zu wählen, dass der erfindungsgemäße vorgesehene Kraftschluss erreicht wird, welcher die Fügepartner in Längsrichtung auch während des Betriebs sicher fixiert.

Ausgehend von der erfindungsgemäßen Verjüngung können zur Bildung der Verzahnung Längsnuten mit einem entlang ihres Verlaufes gleichbleibenden Abstand zu einer Längsachse der Aufnahmeöffnung gebildet werden. Entsprechend der beschriebenen Verjüngung ergibt sich dadurch der Umstand, dass zwischen den Längsnuten Zähne erzeugt werden, deren Höhe von der Einschubseite in Richtung der gegenüberliegenden Seite zunimmt. Wenn die Flanken der Nuten nicht senkrecht zu einem Boden der Nut verlaufen, nimmt auch die Breite der Zähne an ihrer Zahnspitze entsprechend ab. Durch eine solche Ausgestaltung wird erreicht, dass sich Zähne mit zunächst nur geringer Höhe in das Material des weicheren Fügepartners einschneiden müssen, wobei dann die Materialverdrängung mit zunehmender Einschubtiefe gleichmäßig zunimmt. Dadurch wird erreicht, dass die Schnittkräfte beim Fügen auf einen großen Bereich der Zähne bzw. deren Flanken verteilt wird.

Eine entsprechende Zunahme der Höhe und der Abnahme der Breite der Zähne ergibt sich auch, wenn gemäß einer alternativen Ausgestaltung der Erfindung die Befestigungsabschnitte mit der Verzahnung versehen sind und sich in Richtung ihrer freien Enden verjüngen. An den freien Enden sind dann keine oder nur niedrige Zähne vorhanden, wobei dann ausgehend von dem freien Ende die Höhe der Zähne zunimmt. Die Nuten können durch ein in Längsrichtung geführtes Räumwerkzeug erzeugt werden. Bei entsprechender Wahl des Räumdurchmessers und der Form der Aufnahmeöffnung bzw. des Befestigungsabschnittes kann erreicht werden, dass ausgehend von der Einschubseite der Aufnahmeöffnung ein vorderer Bereich nicht geräumt ist, wodurch ein Einführbereich mit Zentrierwirkung entsteht. Da die Verzahnung praktisch stufenlos an den nicht geräumten Bereich anschließt, können auftretende Spannungen reduziert werden.

Durch die im Rahmen der Erfindung vorgesehene Materialverdrängung und Kontorumformung wird auch unter Betriebsbedingungen des Verbrennungsmotors eine Spielfreiheit sichergestellt, auch wenn die wirkenden Kräfte und Momenten sich abhängig von dem Takt des Verbrennungsmotors erheblich ändern.

Im Rahmen der Erfindung ist die konkrete Ausgestaltung der Verzahnung nicht eingeschränkt. Um einen Drehmomente übertragenden Formschluss zu erreichen, wäre grundsätzlich bereits die Ausbildung einer Nut bzw. eines Zahns ausreichend. Vorzugsweise sind aber um den Innenumfang der Aufnahmeöffnung bzw. dem Außenumfang der Befestigungsabschnitte in Längsrichtung verlaufende Zähne gleichmäßig verteilt angeordnet.

Besonders bevorzugt ist eine Ausgestaltung, bei der zur Bildung der Verzahnung in Längsrichtung verlaufende Nuten mit einem im Querschnitt kreisbogenförmigen Verlauf gebildet werden, um die Kerbspannungen zu reduzieren. Insbesondere kann dort, wo die maximale Zahnhöhe erreicht wird, also an der dem jeweiligen Kurbelzapfen gegenüberliegenden Seite der Aufnahmeöffnung, die Breite des Zahnes in etwa den Radius des bogenförmigen Verlaufes der Nut entsprechen. Die Zähne sind dann im Wesentlichen eben ausgebildet, das heißt, sie verlaufen entlang der ursprünglichen, üblicherweise im Querschnitt kreisförmigen Außenfläche der Befestigungsabschnitte bzw. Innenfläche der Aufnahmeöffnung.

Gemäß einer bevorzugten Weiterbildung der vorliegenden Erfindung weisen die Aufnahmeöffnungen an der Einschubseite, an welcher der Befestigungsabschnitt des zugeordneten Kurbelzapfens eingesetzt ist, einen unverzahnten Zentrier- und Stützdurchmesser auf, wobei auch die Kurbelzapfen einen komplementären Zentrier- und Stützdurchmesser aufweisen. Die einander zugeordneten Stützdurchmesser weisen gegenüber dem anschließenden Bereich der Aufnahmeöffnung bzw. des Befestigungsabschnittes eine radiale Erweiterung auf, wobei die einander zugeordneten Zentrier- und Stützdurchmesser zumindest über einen Teil ihrer Länge zylindrisch oder nahezu zylindrisch geformt sein können. Durch die einander zugeordneten Zentrier- und Stützdurchmesser können nach dem Zusammenfügen die auf die Kurbelzapfen wirkenden Kräfte besser aufgenommen und abgeleitet werden, ohne dass die formschlüssige Verbindung durch die Verzahnung beeinflusst wird. Durch den bezüglich der Kraftbeaufschlagung und die Kraftübertragung der Verzahnung vorgelagerten Zentrier- und Stützdurchmesser kann die Verzahnung langfristig vor einer Beeinträchtigung durch Verformung geschützt werden. Ein Nachlassen der Befestigungskräfte zwischen den Kurbelwangen und den Kurbelzapfen durch ein Ausschlagen oder Ausleiern kann damit vermieden werden.

Die Zentrier- und Stützdurchmesser gewährleisten des Weiteren, dass zum Abschluss des Fügevorganges die beiden miteinander zu verbindenden Teile in eine genau definierte Lage gebracht und exakt rechtwinklig zueinander angeordnet werden.

Die Aufteilung der Aufnahmeöffnungen in jeweils einen vorderen, unverzahnten Bereich mit dem Stützdurchmesser und einen hinteren, mit der Verzahnung versehenen Bereich kann entsprechend der jeweiligen Erfordernisse ausgewählt werden. Vorzugsweise ist vorgesehen, dass ein unverzahnter, den Stützdurchmesser aufweisender Abschnitt der Aufnahmeöffnung sich ausgehend von der jeweiligen Einschubseite sich über 15 % bis 45 % der Gesamtlänge der Aufnahmeöffnung erstreckt. Insbesondere kann der Anteil zwischen 25 % und 35 % liegen.

Gegenstand der Erfindung ist auch eine gebaute Kurbelwelle für einen Verbrennungsmotor, die durch das zuvor beschriebene Verfahren hergestellt sein kann, mit den Merkmalen des Anspruchs 6. Die gebaute Kurbelwelle umfasst Kurbelwangen mit Aufnahmeöffnungen sowie Kurbelzapfen mit endseitigen Befestigungsabschnitten, wobei die Kurbelwangen und Kurbelzapfen durch einen Form- und Kraftschluss ohne weitere Befestigungsmittel die Schrauben und auch ohne einen Stoffschluss durch Verschweißen oder dergleichen miteinander verbunden sind. Erfindungsgemäß sind die Kurbelwangen und Kurbelzapfen als Fügepartner miteinander verpresst, wobei die Fügepartner eine unterschiedliche Härte aufweisen, wobei der härtere Fügepartner eine vorgefertigte Verzahnung aufweist und wobei das Material des weicheren Fügepartners durch die Verzahnung bereichsweise verdrängt und umgeformt ist. Auch im montierten Zustand ist es gemäß einer besonders bevorzugten Ausgestaltung der Erfindung vorgesehen, dass die Kontaktfläche der jeweils einander zugeordneten Fügepartner zumindest entlang von Zahnspitzen der Verzahnung parabelförmig verläuft.

Die Kurbelwangen weisen gemäß ihrer allgemeinen Ausgestaltung üblicherweise zwei nebeneinander angeordnete Aufnahmeöffnungen auf. Um die Aufnahmeöffnungen herum ist dann eine ausreichende Materialdicke vorzusehen, um eine ausreichende Stabilität bereitzustellen. Zwischen den beiden Aufnahmeöffnungen können die Kurbelwangen aber eine Einschürung aufweisen, um die rotierende Masse zu verringern.

Die Kurbelwangen können insbesondere als Schmiedteile ausgebildet sein, wobei als Werkstoff insbesondere 42CrMo4 geeignet ist. Die sich verjüngende, vorzugsweise parabelförmig verjüngende Innenform der Aufnahmeöffnungen kann beispielsweise durch ein Bohren erzeugt werden, nachdem die geschmiedeten Kurbelwangen gestrahlt und vergütet sind. Wenn die Aufnahmeöffnungen mit einer Verzahnung versehen werden sollen, wird die Verzahnung zweckmäßigerweise durch ein Räumen der Nuten in Längsrichtung der Aufnahmeöffnungen erzeugt.

An der dem Kurbelzapfen zugewandten Seite kann um die Aufnahmeöffnung eine ringförmige Einbuchtung vorgesehen sein, um beim Fügen der Teile eine gewisse Materialausdehnung zu ermöglichen. Schließlich ist es zweckmäßig, wenn an der Einschubseite ausgehend von der Stirnfläche ein trichterförmiger Radius vorgesehen ist.

Die Lagerzapfen können beispielsweise aus dem Werkstoff 100Cr6 gebildet werden. Die Befestigungsabschnitte werden dann vorzugsweise mit einer sich verjüngenden Form, insbesondere parabolisch verjüngenden Form versehen. Sofern zwischen den Befestigungsabschnitten und den darauffolgenden Abschnitten der Kurbelzapfen eine Stufe vorgesehen ist, wird dort ausgehend von den Befestigungsabschnitten bevorzugt ein Radius vorgesehen, um eine gleichmäßige Kraftübertragung zu gewährleisten.

Um das Einführen in die Aufnahmeöffnungen zu erleichtern, können die Befestigungsabschnitte auch mit einer Rollierung versehen werden. Damit ist gemeint, dass an den Befestigungsabschnitten in Umfangrichtung umlaufende Vorsprünge und Vertiefungen gebildet werden, so dass sich im Längsschnitt eine Wellenform ergibt. Bei dem Verbinden der Fügeparameter wird dann die zum Einschneiden der Verzahnung notwendige Presskraft entsprechend der Wellenform moduliert, wobei durch die beschriebene parabolische Form und eine Zunahme der Höhe der Zähne durch die gleichzeitige Umformung in verschiedenen Längsabschnitten die Auswirkung einer solchen Modulation reduziert wird.

Mit einem parabolischen Verlauf ist im Rahmen der Erfindung eine Form gemeint, die der Form einer Parabel entspricht, wenn die y-Achse der Parabel entlang der Längsachse der Aufnahmeöffnung verläuft. Im weitesten Sinne ergibt sich eine Art kelchförmige Ausgestaltung, wobei die Aufnahmeöffnung jedoch an ihren beiden Enden offen ist, so dass der Verlauf lediglich einem Ausschnitt eines parabelförmigen Rotationskörpers entspricht. In Anlehnung an den Begriff eines Kegelstumpfes kann der Verlauf auch als Parabelstumpf bezeichnet werden.

Die Erfindung wird im Folgenden anhand einer lediglich ein Ausführungsbeispiel darstellenden Zeichnung erläutert. Es zeigen:
- **Fig. 1**: eine Kurbelwange mit zwei Aufnahmeöffnungen zur Aufnahme eines Befestigungsabschnittes eines Kurbelzapfens, wobei ein Kurbelzapfen bereits eingepresst ist,
- **Fig. 2**: eine Teilansicht eines Kurbelzapfens mit einem endseitigen Befestigungsabschnitt,
- **Fig. 3**: eine Detailansicht einer Aufnahmeöffnung in einem Längsschnitt vor der Bildung einer Verzahnung,
- **Fig. 4**: eine Detailansicht einer Aufnahmeöffnung im Längsschnitt nach der Bildung der Verzahnung,
- **Fig. 5**: eine Ansicht einer vollständigen Kurbelwange im Längsschnitt,
- **Fig. 6**: eine Detailansicht der Verzahnung der Aufnahmeöffnung in einem Querschnitt,
- **Fig. 7**: eine Seitenansicht einer Kurbelwange mit zwei daran angeordnete Kurbelzapfen,
- **Fig. 8**: die Anordnung gemäß der Fig. 7 in einem Längsschnitt,
- **Fig. 9**: eine alternative Ausgestaltung einer Kurbelwanne,
- **Fig. 10**: eine alternative Ausgestaltung eines Kurbelzapfens,
- **Fig. 11**: die Kurbelwanne gemäß der Fig. 9 und der Kurbelzapfen gemäß der Fig. 10 im verbundenen Zustand.

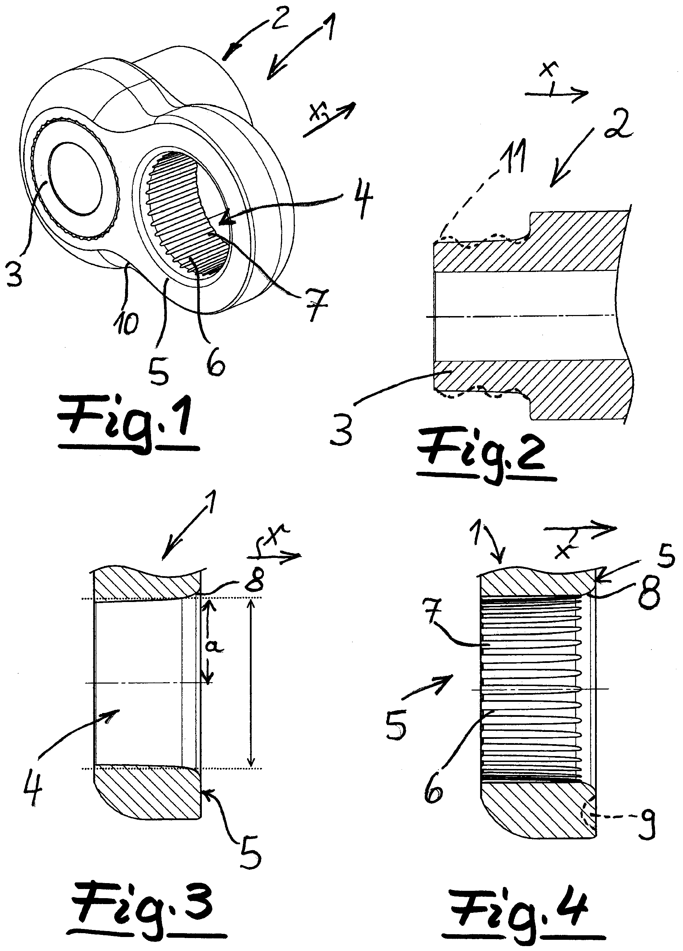

Fig. 1 zeigt eine Kurbelwange 1 und einen Kurbelzapfen 2, der mit einem Befestigungsabschnitt 3 in eine Aufnahmeöffnung 4 der Kurbelwange 1 eingesetzt ist. Die Kurbelwange 1 umfasst eine weitere Aufnahmeöffnung 4, welche für die Aufnahme eines weiteren Kurbelzapfens 2 von der gegenüberliegenden Seite vorgesehen ist. An den Kurbelzapfen 2 erfolgt wahlweise die Lagerung von nicht dargestellten Pleuelstangen oder die Lagerung der aus mehreren Kurbelzapfen 2 und Kurbelwangen 1 gebildeten Kurbelwelle.

Abgesehen davon, dass die Einschubrichtung zweier Kurbelzapfen 2 an einer Kurbelwange 1 entgegengesetzt ist, ist ausgehend von einer dem jeweiligen Kurbelzapfen 2 zugeordneten Einschubseite 5 der Aufnahmeöffnung 4 die Ausgestaltung beider Aufnahmeöffnungen 4 an einer Kurbelwange 1 in dem dargestellten Ausführungsbeispiel gleich. Wie der Fig. 1 zu entnehmen ist, weisen beide Aufnahmeöffnungen 4 eine in einer Längsrichtung x der Kurbelwelle verlaufende Verzahnung mit Zähnen 6 und dazwischen verlaufenden Nuten 7 auf. Bereits aus der Fig. 1 ist zu erkennen, dass die Zähne 6 ausgehend von der Einschubseite 5 zunächst mit einem Abstand zu dem Rand der Aufnahmeöffnung 4 beginnen, wobei der Höhenunterschied zwischen den Spitzen der Zähnen 6 und dem Boden der Nuten 7 ausgehend von der Einschubseite 5 in die Aufnahmeöffnung 6 hinein zunimmt. Gleichzeitig wird die Breite der Zähne 6 an ihrer Zahnspitze geringer.

Die Fig. 3 zeigt eine Aufnahmeöffnung 4 der Kurbelwangen 1 vor der Erzeugung der Verzahnung. Zu erkennen ist, dass die Aufnahmeöffnungen 4 zunächst durch einen Radius eine trichterförmige Erweiterung 8 aufweisen, die einerseits beim Einpressen eines zugeordneten Befestigungsabschnittes 3 eines Kurbelzapfens 2 eine Zentrierung bewirkt. Darüber hinaus können durch die trichterförmige Erweiterung 8 auch Materialspannung unmittelbar an dem Rand der Aufnahmeöffnung 4 vermieden werden.

Darüber hinaus ist auch zu erkennen, dass sich die Aufnahmeöffnung 4 ausgehend von der Einschubseite 5 verjüngt. Besonders bevorzugt verläuft der ausgehend von der Einschubseite 5 an die trichterförmige Erweiterung 8 anschließende Bereich parabelförmig.

In der Fig. 3 ist des Weiteren angedeutet, dass die Nuten 7 der Verzahnung durch ein in Längsrichtung x geführtes Räumwerkzeug erzeugt werden. Die Nuten 7 der Verzahnung weisen dann entlang ihres Verlaufes einen gleichbleibenden Abstand a zu einer Längsachse der Aufnahmeöffnungen auf.

Wie in Fig. 4 dargestellt, führte dies dazu, dass die Nuten 7 erst mit einem gewissen Abstand zu der Stirnfläche der Kurbelwangen 1 an der Einschubseite 5 beginnen, wobei ausgehend von einem Boden der Nuten 7 die Höhe der Zähne 6 ausgehend von der Einschubseite 5 zunimmt und die Zähne 6 an ihrer Spitze schmaler werden. Durch diese Formgebung wird erreicht, dass der in Fig. 2 dargestellte Kurbelzapfen 2, der an seinem Befestigungsabschnitt 3 ebenfalls parabelförmig geformt ist, bei dem Einpressen in die Aufnahmeöffnung 4 an seiner Außenfläche gleichmäßig umgeformt wird, wodurch auch eine verteilte Kraftanleitung sowie ein besonders fester Kraftschluss erzeugt werden.

In der Fig. 4 ist zusätzlich angedeutet, dass an der Einschubseite 5 um die Aufnahmeöffnung 4 herum eine umlaufende Entlastungskerbe 9 vorgesehen sein kann, um die Spannungen in der Kurbelwange 1 zu reduzieren.

Aus den Fig. 1 und 2 ist ersichtlich, dass der gesamte Kurbelzapfen 2 gemäß einer bevorzugten Ausgestaltung hohl ist, um sowohl das Gewicht als auch die rotierende Masse zu verringern. Ebenfalls weisen die Kurbelwangen 1 zu dem gleichen Zweck zwischen den Aufnahmeöffnungen 4 Einbuchtungen 10 auf.

In der Fig. 2 ist schließlich dargestellt, dass die Befestigungsabschnitte 3 optional auch mit einer Rollierung 11 versehen sein können, wobei um den Umfang umlaufende Wellen gebildet sind.

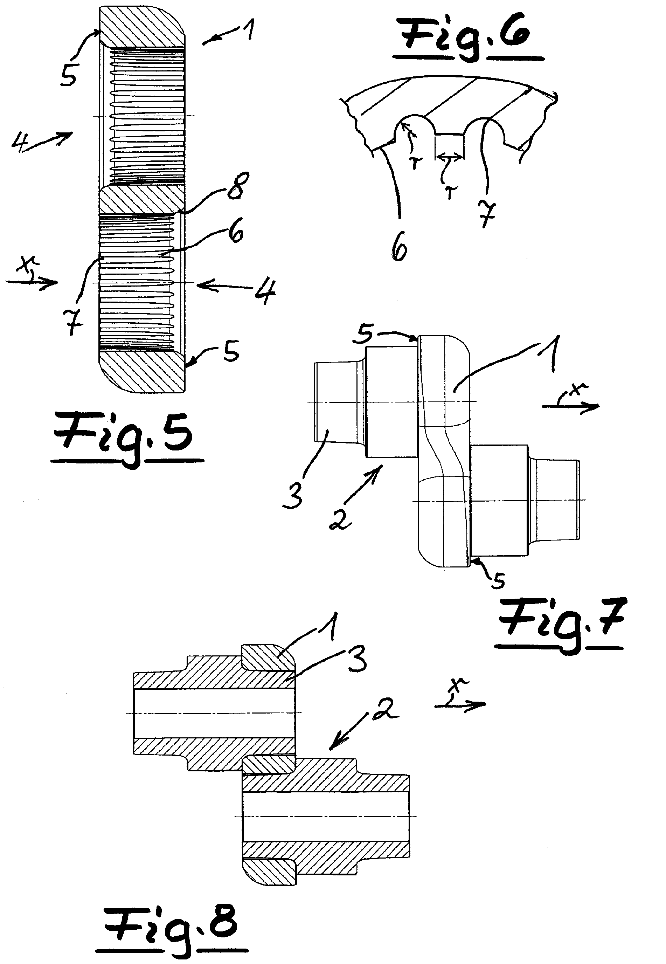

Fig. 5 zeigt schließlich eine vollständige Kurbelwange, die an ihren beiden Aufnahmeöffnungen 4 mit gegenüberliegenden Einschubseiten 5 mit einer Verzahnung versehen ist. Es ist unmittelbar zu erkennen, dass bis auf die gegenüberliegende Anordnung der Einschubseite 5 eine übereinstimmende Ausgestaltung vorliegt.

Die Fig. 6 zeigt schließlich eine bevorzugte Ausgestaltung der Verzahnung, wobei die in Längsrichtung verlaufenden Nuten 7 einen im Querschnitt kreisbogenförmigen Verlauf mit einem Radius r aufweisen. Die Fig. 6 zeigt die Verzahnung in einem von der Einschubseite 5 entfernten Bereich, wobei dort die Breite der Zähne 6 in etwa dem Radius r der Nuten 7 entspricht. Durch die beschriebene Form der Nuten 7 kann die Kerbspannung wirkungsvoll reduziert werden.

Schließlich zeigen die Fig. 7 und 8 eine Kurbelwange 1 mit zwei von gegenüberliegenden Seiten eingepressten Kurbelzapfen 2. Die Kurbelzapfen 2 sind durch die Verzahnung und das Einpressen einerseits in einem Formschluss und andererseits in einem Kraftschluss gehalten. Eine zusätzliche Fixierung der Kurbelzapfen 2 an den Kurbelwangen 1 ist auch für den Betrieb der Kurbelwelle weder notwendig noch vorgesehen. Abgesehen davon, dass weitere Befestigungsmaßnahmen aufwendig sind, könnten dadurch auch unerwünschte Unwuchten erzeugt werden.

Ausgehend von der Fig. 8 ist selbstverständlich, dass die gesamte Kurbelwelle sich aus einer Vielzahl von aneinander gefügten Kurbelwangen 1 und Kurbelzapfen 2 zusammensetzt, wobei durch den modularen Aufbau freie Variationsmöglichkeiten bestehen.

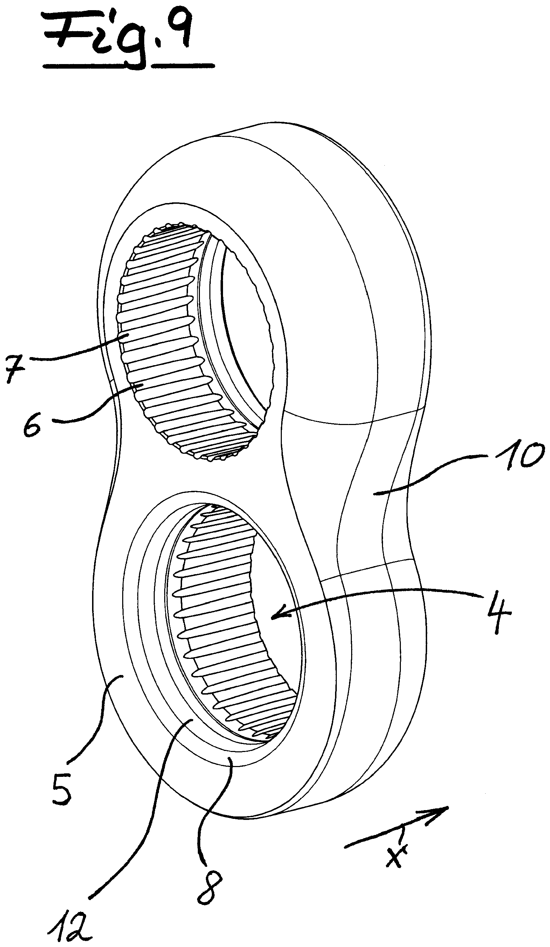

Die Fig. 9 zeigt eine alternative Ausgestaltung einer Kurbelwanne 1, die an ihrer Einschubseite 5 zunächst die zuvor beschriebene trichterförmige Erweiterung 8 und einen daran anschließenden Zentrier- und Stützdurchmesser 12 aufweist. Die trichterförmige Erweiterung 8 und der Zentrier- und Stützdurchmesser 12 sind an einem unverzahnten Abschnitt der Aufnahmeöffnung 4 angeordnet, der sich über etwa 30 % der Gesamtlänge der Aufnahmeöffnung 4 erstreckt.

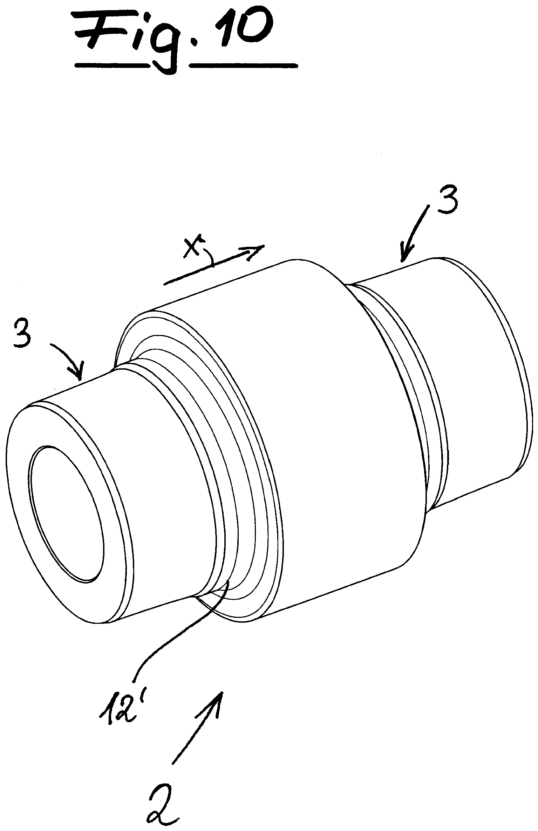

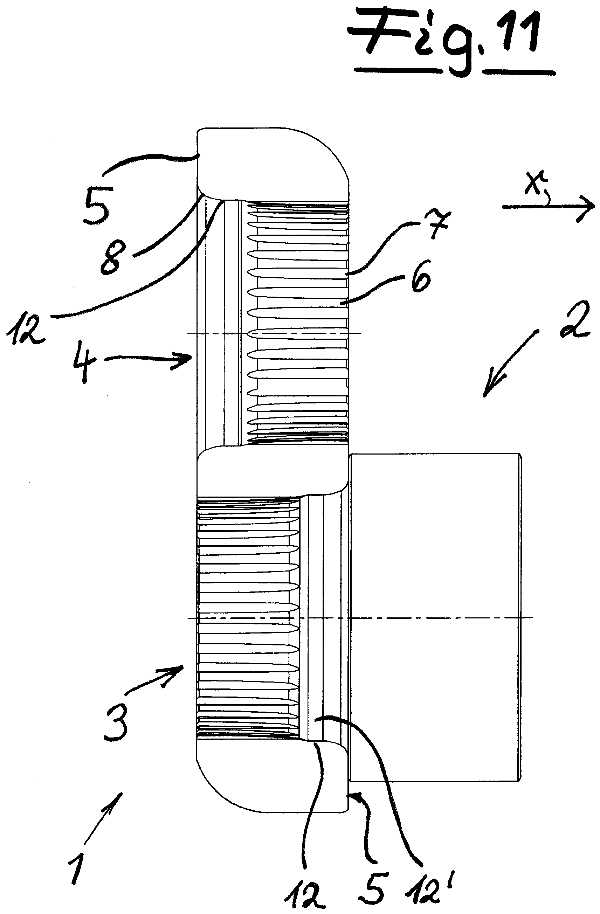

Den Fig. 10 und 11 ist zu entnehmen, dass der Kurbelzapfen 2 mit einem zugeordneten Zentrier- und Stützdurchmesser 12' versehen ist.

Die einander Zentrier- und Stützdurchmesser 12, 12' gewährleisten zunächst bei dem Einpressen eine genaue Zentrierung und Ausrichtung des Kurbelzapfens 2 gegenüber der Kurbelwanne 1. Des Weiteren ergeben sich bei der gesamten gebauten Kurbelwelle nach der Montage auch Vorteile, weil auf die Kurbelzapfen 2 wirkenden Kräfte über die einander zugeordneten Zentrier- und Stützdurchmesser 12, 12' auf die angrenzenden Kurbelwangen 1 übertragen werden können, ohne dass die von den Nuten 7 und Zähnen 6 gebildete Verzahnung übermäßig belastet wird.

## Patentansprüche

1. Verfahren zur Herstellung einer gebauten Kurbelwelle für einen Verbrennungsmotor, wobei als Fügepartner Kurbelwangen (1) mit Aufnahmeöffnungen (4) und Kurbelzapfen (2) mit endseitigen Befestigungsabschnitten (3) bereitgestellt werden, wobei die Aufnahmeöffnungen (4) mit einer in einer Längsrichtung (x) der Kurbelwelle verlaufenden Verzahnung versehen sind, wobei zur Bildung der Verzahnung Nuten (7) mit einem entlang ihres Verlaufes gleichbleibenden Abstand (a) zu einer Längsachse der Aufnahmeöffnung (4) gebildet werden und zwischen den Nuten (7) Zähne (6) erzeugt werden, und wobei der Querschnitt der Befestigungsabschnitte (3) durch die Verzahnung bereichsweise über den Innenquerschnitt einer zugeordneten Aufnahmeöffnung (4) hinausgeht, so dass bei dem Verbinden der Fügepartner an den Aufnahmeöffnungen (4) der Kurbelwangen (1) oder den Befestigungsabschnitten (3) der Kurbelzapfen (2) eine Materialverdrängung und Konturumformung erfolgt und die Fügepartner so formschlüssig verbunden werden, und wobei die Befestigungsabschnitte (3) derart in die Aufnahmeöffnungen (4) eingepresst werden, dass die Fügepartner ohne weitere Befestigungsmittel und ohne eine zusätzliche Verbindung in Längsrichtung (x) betriebssicher in einem Kraftschluss aneinander fixiert werden,
wobei die Kurbelwangen (1) mit Aufnahmeöffnungen (4) bereitgestellt werden, die sich ausgehend von einer dem zugeordneten Kurbelzapfen (2) zugewandten Einschubseite (5) in Richtung einer gegenüberliegenden Seite mit einem in Längsschnitt zumindest abschnittsweise parabelförmigen Verlauf verjüngen, und dass ein Höhenunterschied zwischen Spitzen der Zähne (6) und dem Boden der Nuten (7) der Verzahnung ausgehend von der Einschubseite (5) in die Aufnahmeöffnung (4) hinein zunimmt.

2. Verfahren nach Anspruch 1 , **dadurch gekennzeichnet, dass** die Befestigungsabschnitte (3) mit einer in einer Längsrichtung (x) der Kurbelwelle verlaufenden Verzahnung versehen werden.

3. Verfahren nach einem der Ansprüche 1 oder 2, **dadurch gekennzeichnet, dass** die Nuten (7) durch ein in Längsrichtung (x) geführtes Räumwerkzeug erzeugt werden.

4. Verfahren nach einem der Ansprüche 1 bis 3, **dadurch gekennzeichnet, dass** die Befestigungsabschnitte (3) sich in Richtung ihrer freien Enden verjüngen.

5. Verfahren nach einem der Ansprüche 1 bis 4, **dadurch gekennzeichnet, dass** zur Bildung der Verzahnung in Längsrichtung verlaufende Nuten (7) mit einem im Querschnitt kreisbogenförmigen Verlauf gebildet werden.

6. Gebaute Kurbelwelle für einen Verbrennungsmotor, insbesondere hergestellt nach einem Verfahren gemäß einem der Ansprüche 1 bis 5, mit Aufnahmeöffnungen (4) aufweisenden Kurbelwangen (1) und mit endseitige Befestigungsabschnitte (3) aufweisenden Kurbelzapfen (2), welche durch einen Form- und Kraftschluss ohne weitere Befestigungsmittel miteinander verbunden sind, **dadurch gekennzeic hnet**, dass die Kurbelwangen (1) und Kurbelzapfen (2) als Fügepartner miteinander verpresst sind und eine unterschiedliche Härte aufweisen, wobei die Kurbelwange (1) der härtere Fügepartner ist, welcher eine vorgefertigte Verzahnung aufweist, wobei das Material des Kurbelzapfens (2), welcher der weichere Fügepartner ist durch die Verzahnung bereichsweise verdrängt und umgeformt ist und wobei die Kontaktfläche zwischen den Fügepartnern zumindest entlang von Zahnspitzen der Verzahnung parabelförmig verläuft, sodass ein Höhenunterschied zwischen den Zahnspritzen der Verzahnung und dem Boden von Nuten (7) der Verzahnung ausgehend von der Einschubseite (5) in die Aufnahmeöffnungen (4) hinein zunimmt.

7. Gebaute Kurbelwelle nach Anspruch 6, **dadurch gekennzeichnet, dass** die Kurbelwangen (1) als Schmiedeteile ausgebildet sind.

8. Gebaute Kurbelwelle nach Anspruch 6 oder 7, **dadurch gekennzeichnet, dass** die Aufnahmeöffnungen (4) an eine Einschubseite (5), an welcher der Befestigungsabschnitt (3) des zugeordneten Kurbelzapfens (2) eingesetzt ist, einen unverzahnten Zentrier- und Stützdurchmesser (12) aufweist, wobei auch die Kurbelzapfen (2) einen komplementären Zentrier- und Stützdurchmesser (12') aufweisen.

9. Gebaute Kurbelwelle nach Anspruch 8, **dadurch gekennzeichnet, dass** ein unverzahnter, den Zentrier- und Stützdurchmesser (12) aufweisender Abschnitt der Aufnahmeöffnungen (4) sich ausgehend von der jeweiligen Einschubseite sich über 15 % bis 45 % der Gesamtlänge der Aufnahmeöffnungen (4) erstreckt.

10. Gebaute Kurbelwelle nach einem der Ansprüche 6 bis 9, **dadurch gekennzeichnet, dass** die Befestigungsabschnitte (3) mit einer in einer Längsrichtung (x) der Kurbelwelle verlaufenden Verzahnung versehen sind.

11. Gebaute Kurbelwelle nach einem der Ansprüche 6 bis 9, **dadurch gekennzeichnet, dass** die Kurbelwange (1) zwei nebeneinander angeordnete Aufnahmeöffnungen (4) aufweist, wobei zwischen den Aufnahmeöffnungen (4) eine Einbuchtung (10) vorgesehen ist.

12. Gebaute Kurbelwelle nach einem der Ansprüche 6 bis 9, **dadurch gekennzeichnet, dass** die Zähne (6) der Verzahnung und die dazwischen verlaufenden Nuten (7) mit einem Abstand zum Rand der Aufnahmeöffnung (4) beginnend ausgebildet sind.

## Claims

1. Method for producing an assembled crankshaft for an internal combustion engine,
wherein crank webs (1) with receiver openings (4) and crank pins (2) with fixing portions (3) at their ends are provided as joint partners,
wherein the receiver openings (4) are provided with a toothing running in a longitudinal direction (x) of the crankshaft, wherein to form the toothing, grooves (7) are formed with a distance (a) from a longitudinal axis of the receiver opening (4) which remains constant over their course and teeth (6) are produced between the grooves (7), and wherein the cross section of the fixing portions (3) extends in regions through the toothing beyond the inner cross section of an assigned receiver opening (4), so that on connection of the joint partners, a material displacement and contour deformation occur at the receiver openings (4) of the crank webs (1) or at the fixing portions (3) of the crank pins (2), and the joint partners are thus connected by form fit, and wherein the fixing portions (3) are pressed into the receiver openings (4) such that the joint partners are fixed together operationally reliably in a force fit connection without further fixing means and without an additional connection in the longitudinal direction (x),
wherein the crank webs (1) are provided with receiver openings (4) which taper in the longitudinal section at least in portions in a parabolic shape, starting from an insert side (5) facing the assigned crank pin (2) in the direction of an opposite side, and in that a height difference between tips of the teeth (6) and the base of the grooves (7) of the toothing increases starting from the insert side (5) into the receiver opening (4).

2. Method according to Claim 1, **characterized in that** the fixing portions (3) are provided with a toothing running in a longitudinal direction (x) of the crankshaft.

3. Method as claimed in Claim 1 or 2, **characterized in that** the grooves (7) are produced by a reaming tool guided in the longitudinal direction (x).

4. Method as claimed in any of Claims 1 to 3, **characterized in that** the fixing portions (3) taper towards their free ends.

5. Method as claimed in any of Claims 1 to 4, **characterized in that** to form the toothing, grooves (7) running in the longitudinal direction with an arcuate cross section are formed.

6. Assembled crankshaft for an internal combustion engine, in particular produced in a method as claimed in any of Claims 1 to 5, with crank webs (1) having receiver openings (4) and with crank pins (2) having end fixing portions (3), which are connected together by form- and force-fit without further fixing means, **characterized in that** the crank webs (1) and crank pins (2) are pressed together as joint partners and have a different hardness, wherein the crank web (1) is the harder joint partner which has a pre-produced toothing, wherein the material of the crank pin (2) which is the softer joint partner is displaced and deformed in regions by the toothing, and wherein the contact face between the joint partners runs parabolically at least along tooth tips of the toothing, so that a height difference between the tooth tips of the toothing and the base of the grooves (7) of the toothing increases starting from the insert side (5) into the receiver openings (4).

7. Assembled crankshaft as claimed in Claim 6, **characterized in that** the crank webs (1) are formed as forgings.

8. Assembled crankshaft as claimed in Claim 6 or 7, **characterized in that** the receiver openings (4) have an untoothed centering and supporting diameter (12) on an insert side (5) at which the fixing portion (3) of the assigned crank pin (2) is inserted, wherein also the crank pins (2) have a complementary centering and supporting diameter (12').

9. Assembled crankshaft as claimed in Claim 8, **characterized in that** an untoothed portion of the receiver openings (4) having the centering and supporting diameter (12) extends, starting from the respective insert side, over 15% to 45% of the total length of the receiver openings (4).

10. Assembled crankshaft according to any of Claims 6 to 9, **characterized in that** the fixing portions (3) are provided with a toothing running in a longitudinal direction (x) of the crankshaft.

11. Assembled crankshaft according to any of Claims 6 to 9, **characterized in that** the crank web (1) has two adjacent receiver openings (4), wherein an indentation (10) is provided between the receiver openings (4).

12. Assembled crankshaft according to any of Claims 6 to 9, **characterized in that** the teeth (6) of the toothing and the grooves (7) running in-between are formed beginning at a distance from the edge of the receiver opening (4).

## Revendications

1. Procédé de fabrication d'un vilebrequin intégré destiné à un moteur à combustion interne, des flasques de vilebrequin (1) pourvus d'ouvertures de réception (4) et des manetons de vilebrequin (2) pourvus de parties de fixation côté extrémité (3) étant prévus comme éléments de jonction, les ouvertures de réception (4) étant pourvues d'une denture s'étendant dans une direction longitudinale (x) du vilebrequin, des rainures étant formées à une distance (a), constante sur leur extension, par rapport à un axe longitudinal de l'ouverture de réception (4) et des dents (6) étant réalisées entre les rainures (7) pour former la denture (7), et la section transversale des parties de fixation (3) s'étendant à travers la denture au-delà de la section transversale intérieure d'une ouverture de réception associée (4) de sorte que, lors de la liaison des éléments de jonction aux ouvertures de réception (4) des flasques de vilebrequin (1) ou aux parties de fixation (3) des manetons de vilebrequin (2) un déplacement de matière et une déformation de contour sont effectués et les éléments de jonction sont ainsi reliés par complémentarités de formes, et les parties de fixation (3) étant enfoncées dans les ouvertures de réception (4) de telle sorte que les éléments de liaison soient fixés les uns aux autres par une liaison en force pour un fonctionnement sûr sans autre moyen de fixation et sans liaison supplémentaire dans la direction longitudinale (x), les flasques de vilebrequin (1) étant pourvus d'ouvertures de réception (4) qui se rétrécissent depuis un côté d'insertion (5), faisant face au maneton de vilebrequin associé (2), en direction d'un côté opposé suivant une courbe au moins par endroits parabolique en coupe longitudinale, et une différence de hauteur entre les pointes des dents (6) et le fond des rainures (7) de la denture augmentant depuis le côté d'insertion (5) jusque dans l'ouverture de réception (4).

2. Procédé selon la revendication 1, **caractérisé en ce que** les parties de fixation (3) sont pourvues d'une denture s'étendant dans une direction longitudinale (x) du vilebrequin.

3. Procédé selon l'une des revendications 1 ou 2, **caractérisé en ce que** les rainures (7) sont réalisées par un outil de brochage guidé dans une direction longitudinale (x).

4. Procédé selon l'une des revendications 1 à 3, **caractérisé en ce que** les parties de fixation (3) se rétrécissent en direction de leurs extrémités libres.

5. Procédé selon l'une des revendications 1 à 4, **caractérisé en ce que**, pour former la denture, des rainures (7) s'étendant dans la direction longitudinale sont formées suivant une courbe en arc de cercle en coupe transversale.

6. Vilebrequin intégré pour moteur à combustion interne, fabriqué en particulier par un procédé selon l'une des revendications 1 à 5, comprenant des flasques de vilebrequin (1) pourvus d'ouvertures de réception (4) et des manetons de vilebrequin (2) qui comportent des parties de fixation côté extrémité (3) et qui sont liés entre eux sans autre moyen de fixation, **caractérisé en ce que** les flasques de vilebrequin (1) et les manetons de vilebrequin (2) sont pressés les uns contre les autres en tant qu'éléments de jonction et ont des duretés différentes, le flasque de vilebrequin (1) étant l'élément de jonction le plus dur qui a une denture préfabriquée, la matière du maneton de vilebrequin (2), qui est l'élément de jonction le plus tendre, étant partiellement déplacé et déformée par la denture, et la surface de contact entre les éléments de jonction s'étendant de manière parabolique au moins le long des pointes des dents de la denture de sorte qu'une différence de hauteur entre les pointes de dent de la denture et le fond des rainures (7) de la denture augmente depuis le côté d'insertion (5) jusque dans les ouvertures de réception (4).

7. Vilebrequin intégré selon la revendication 6, **caractérisé en ce que** les flasques de vilebrequin (1) sont réalisés sous la forme de pièces forgées.

8. Vilebrequin intégré selon la revendication 6 ou 7, **caractérisé en ce que**, sur un côté d'insertion (5) où la partie de fixation (3) du maneton de vilebrequin (2) associé est insérée, les ouvertures de réception (4) ont un diamètre de centrage et de support non denté (12), le maneton de vilebrequin (2) ayant un diamètre de centrage et de support (12') complémentaire.

9. Vilebrequin intégré selon la revendication 8, **caractérisé en ce qu'**une partie non dentée, ayant le diamètre de centrage et de support (12), des ouvertures de réception (4) s'étend depuis le côté d'insertion respectif sur 15 % à 45 % de la longueur totale des ouvertures de réception (4).

10. Vilebrequin intégré selon l'une des revendications 6 à 9, **caractérisé en ce que** les parties de fixation (3) sont pourvues d'une denture s'étendant dans la direction longitudinale (x) du vilebrequin.

11. Vilebrequin intégré selon l'une des revendications 6 à 9, **caractérisé en ce que** le flasque de vilebrequin (1) comporte deux ouvertures de réception (4) juxtaposées, un évidement (10) étant ménagé entre les ouvertures de réception (4).

12. Vilebrequin construit selon l'une des revendications 6 à 9, **caractérisé en ce que** les dents (6) de la denture et les rainures (7) s'étendant entre celles-ci sont formées à une distance du bord de l'ouverture de réception (4).
